(19) Europäisches Patentamt / European Patent Office / Office européen des brevets

(11) **EP 4 579 535 A1**

(12) **EUROPEAN PATENT APPLICATION**

(43) Date of publication:
**02.07.2025 Bulletin 2025/27**

(21) Application number: **24220487.3**

(22) Date of filing: **17.12.2024**

(51) International Patent Classification (IPC):
**G06N 5/01** *(2023.01)* **G06F 17/11** *(2006.01)*
**G06N 20/00** *(2019.01)*

(52) Cooperative Patent Classification (CPC):
**G06N 5/01; G06F 17/11; G06N 20/00;** G06N 3/045

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.12.2023 JP 2023222858**

(71) Applicant: **FUJITSU LIMITED**
**Kawasaki-shi, Kanagawa 211-8588 (JP)**

(72) Inventor: **Ichikawa, Yuma**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **MACHINE LEARNING PROGRAM, DETERMINATION PROGRAM, MACHINE LEARNING METHOD, DETERMINATION METHOD, MACHINE LEARNING DEVICE, AND DETERMINATION DEVICE**

(57) A machine learning program for causing a computer to execute a process includes training a machine learning model by machine learning that uses a cost function in which each element of a matrix obtained by relaxing a discrete variable to be optimized to a continuous matrix becomes a discrete optimization problem as a cost function in a search process that performs a search by adopting continuous relaxation into the discrete optimization problem.

FIG. 3A

EP 4 579 535 A1

## Description

FIELD

The embodiment discussed herein is related to a machine learning program, a determination program, a machine learning method, a determination method, a machine learning device, and a determination device.

BACKGROUND

Techniques of optimizing complex combinations have been disclosed.

Citation List

Non-Patent Literature

Schuetz, M. J., Brubaker, J. K., and Katzgraber, H. G. (2022a), "Combinatorial optimization with physics-inspired graph neural networks" Nature Machine Intelligence, 4 (4): 367-377,
Schuetz, M. J., Brubaker, J. K., Zhu, Z., and Katzgraber, H. G. (2022b), "Graph coloring with physics-inspired graph neural networks" Physical Review Research, 4 (4): 043131

SUMMARY OF INVENTION

TECHNICAL PROBLEMS

In combinatorial optimization, it is considered to search for an optimum solution by a continuous relaxation solving method using a machine learning model. However, it is difficult to obtain a plurality of solutions.

In one aspect, an object of the present embodiment is to provide a machine learning program, a determination program, a machine learning method, a determination method, a machine learning device, and a determination device capable of obtaining a plurality of solutions in a combinatorial optimization problem.

SOLUTION TO BROBLEM

According to an aspect of the embodiments, a machine learning program for causing a computer to execute a process includes training a machine learning model by machine learning that uses a cost function in which each element of a matrix obtained by relaxing a discrete variable to be optimized to a continuous matrix becomes a discrete optimization problem as a cost function in a search process that performs a search by adopting continuous relaxation into the discrete optimization problem.

BRIEF DESCRIPTION OF DRAWINGS

FIG. 1 is a diagram exemplifying conversion into a graph-embedded vector;
FIG. 2 is a diagram exemplifying a verification result;
FIG. 3A is a functional block diagram illustrating an overall configuration of an information processing device according to a first embodiment, and FIG. 3B is a block diagram illustrating details of a constraint adjustment unit;
FIG. 4 is a hardware configuration diagram of the information processing device;
FIG. 5 is a flowchart illustrating exemplary operation of the information processing device at a time of machine learning; and
FIG. 6 is a flowchart illustrating exemplary operation of the information processing device at a time of performing optimization using a machine learning result.

DESCRIPTION OF EMBODIMENTS

Optimization problems exist in fields of various industries including a manufacturing industry and a distribution industry. In particular, a combinatorial optimization problem for optimizing a combination is one of the most important fields in the field of optimization. The combinatorial optimization problem is applied in various fields such as transportation, logistics, communication, finance, and the like.

While a general-purpose solver, such as an Ising machine, searches for a constraint satisfaction solution using a penalty method, it is difficult to find a solution depending on a penalty coefficient. According to a local transition algorithm as in the Ising machine, only a local solution may be searched for, and it is difficult to obtain a plurality of solutions at a time.

With the development of information science, techniques aiming at high-speed solving of combinatorial optimization using machine learning have been developed. As one of the techniques, an optimization solving method based on continuous relaxation simulated annealing is exemplified. However, according to the optimization solving method based on the continuous relaxation simulated annealing, it is difficult to optimize a plurality of cost functions by a single training. Furthermore, it is needed to promote efficiency in a tuning operation of the penalty coefficient and to obtain various solutions.

First, the penalty method will be described. A constrained optimization problem is expressed by the following formula (1). The following formula (1) represents an optimization problem for minimizing C (x). Here, an equality constraint is expressed by the following formula (2), and an inequality constraint is expressed by the following formula (3).

[Math. 1]

$$\min_{x} C(x), \qquad subject \ to \ V(x) = 0 \quad (1)$$

[Math. 2]

$$f(x) = 0 \rightarrow V(x) = f^2(x) \ or \ |f(x)| \quad (2)$$

[Math. 3]

$$g(x) < a \rightarrow V(x) = \max(0, g(x) - a) \quad (3)$$

The penalty method is expressed by the following formula (4). R represents a Euclidean space. In the following formula (4), $\gamma$ represents a penalty coefficient. When the penalty coefficient $\gamma$ is too large, a solution tends to be trapped in a local solution. On the other hand, when the penalty coefficient $\gamma$ is too small, most of the search time is spent in an infeasible region. Thus, the penalty coefficient $\gamma$ needs to be determined appropriately.

[Math. 4]

$$minE(x; \gamma), E(x) = C(x) + \gamma V(x), \gamma \in \mathbb{R}_+ \quad (4)$$

Next, a continuous relaxation solving method using a machine learning model will be described. The continuous relaxation solving method is a method of finding a solution by, instead of solving a discrete optimization problem, relaxing the discrete optimization problem to continuous optimization for a parameter $C \in C$ that characterizes the problem. The parameter that characterizes the problem corresponds to, for example, a price of a snack or a capacity of a knapsack in a case of a knapsack problem.

As an example, the continuous relaxation solving method in a QUBO format will be described. The QUBO stands for quadratic unconstrained binary optimization, which is a format in which binary optimization is allowed without a secondary constraint.

The discrete optimization may be expressed as a loss function as in the following formula (5). Note that, in f(x; A), x commonly represents a variable to be optimized, and A commonly represents a constant not to be optimized. In the variable to be optimized, the variable x to be optimized may be omitted as in E(-; C, $\gamma$) in the following formula (5). Furthermore, E(x; C, $\gamma$) represents Cx + $\gamma$. As in the following formula (5), the variable x is a vector represented by 0 and 1, and has N elements.

[Math. 5]

$$E(\cdot; C, \gamma): \{0,1\}^N \times \mathbb{R} \quad (5)$$

According to the continuous relaxation solving method, the QUBO of the formula (5) described above is relaxed to any simple form. As an example, the formula (5) described above is relaxed to a hypercubic lattice. For example, the formula (5) described above is expressed as the following formula (6). In the following formula, $[0, 1]^N$ represents an N-dimensional hypercubic lattice having a value of 0 or 1.
[Math. 6]

$$\hat{E}(\cdot; C, \gamma): [0,1]^N \times C \rightarrow \mathbb{R} \quad (6)$$

However, the loss landscape may still be complex even if the QUBO is subject to the continuous relaxation. Furthermore, an optimum solution having been subject to the relaxation may be greatly different from the original optimum solution.

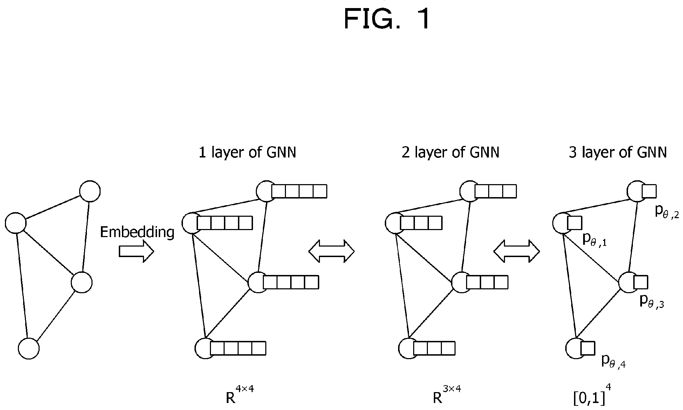

Next, it is conceivable that a parameter p is parameterized by a graph neural network (GNN) and optimized using a loss function of the following formula (7). In the following formula (7), G of the optimization problem is converted into an embedded vector $h_{G,\varphi}$. G represents a graph feature vector in the GNN. For example, in FIG. 1, the graph feature vector G is converted into a graph-embedded vector with the number of nodes N = 4 and the number of edges E = 4. For example, the optimization problem of p comes down to optimization with respect to $(\theta, \varphi)$ in the following formula (7) characterized by a parameter of the GNN. Note that $R^E$ represents an E $\times$ N-dimensional Euclidean space in the following formula (7). A transposed matrix of p is represented by $p^T$.
[Math. 7]

$$\hat{E}_{QUBO}(\theta, \phi; \gamma) = p^T(h_{G,\phi}; \theta, G)Q(\gamma)p(h_{G,\phi}; \theta, G), \quad p(\cdot; \theta, G): \mathbb{R}^E \rightarrow [0,1]^N \quad (7)$$

[Math. 8]

$$\theta^* = \underset{\theta}{\operatorname{argmax}} \, p_\theta^T Q p_\theta \quad (8)$$

However, according to the continuous relaxation solving method described above, only one solution may be obtained from a training result. Furthermore, the training may fail depending on a random seed.

Here, the continuous relaxation solving method described above will be summarized. According to the continuous relaxation solving method described above, it is difficult to obtain a plurality of approximate solutions by a single training. In view of the above, an exemplary case enabled to obtain a plurality of solutions will be described in a first embodiment. Furthermore, according to the continuous relaxation solving method described above, solving performance may greatly change depending on the penalty coefficient. In view of the above, an exemplary case of searching for an appropriate penalty coefficient will also be described in the first embodiment.

[First Embodiment]

First, the principle of the present embodiment will be described.

A discrete variable x $\in$ {0, 1}$^N$ is relaxed to a continuous matrix P $\in$ [0, 1]$^{N \times M}$. A loss function (cost function) of the following formula (9) is optimized such that each column $P_{:,i}$ of the continuous matrix P becomes a solution of the optimization problem. Note that $P_{:,i}$ stands for the i-th column vector of the continuous matrix P.
[Math. 9]

$$\min_{P \in [0,1]^{N \times S}} \Phi(P; \{C_S\}, \{\gamma_S\}) = \sum_{s=1}^{S} \hat{E}(P_{:,i}; C_s, \gamma_s) \quad (9)$$

By the matrix being relaxed as in the formula (9) described above, each column may be regarded as a decision variable, and a plurality of different solutions may be simultaneously obtained in parallel. Furthermore, it also becomes possible to obtain various solutions by using a penalty term.

For example, when $\{C_s\}$ in the formula (9) described above is set to $\{C,..., C\}$, optimization of a plurality of penalty coefficients $\gamma = (\gamma_1,..., \gamma_S)$ may be simultaneously carried out with respect to the same problem as the formula (9) described above, as in the following formula (10). Note that, in a case of using a GNN, the following formula (10) may be expressed as the following formula (11).

[Math. 10]

$$\min_{P} \Phi(P; C, \{\gamma_S\}) = \sum_{s=1}^{S} \hat{E}(P_{:,s}; C, \gamma_S) \quad (10)$$

[Math. 11]

$$\min_{\theta, \phi} \Phi(\theta, \phi; C, \{\gamma_S\}) = \sum_{s=1}^{S} \hat{E}(P_{:,S}(h_{C,\phi}; C, \theta); C, \gamma_S) \quad (11)$$

Here, simultaneous Bayesian optimization of the penalty coefficient $\gamma$ will be described. A surrogate function is trained using the penalty term (training data) of the following formula (12), the loss function, and the penalty coefficient $\gamma$ obtained by simultaneous solving. For example, Gaussian process regression may be used as the surrogate function.

[Math. 12]

$$\left(\gamma_S, C(P_{:,S}^*), V(P_{:,S}^*)\right)_{S=1}^{S} \quad (12)$$

Next, an acquisition function is calculated using the surrogate function, the next search range $[\gamma_{min}, \gamma_{max}]$ is proposed, and $\gamma_{new}$ of S points is sampled again by making a division into grids. Then, a solving result of $\gamma_{new}$ is added to $\gamma$. Note that a method of designing the surrogate function varies depending on the situation. For example, in a case of searching for a constraint satisfaction solution, it is constructed to focus on the $\gamma$ dependency of $C(P^*_{:,S})$.

For example, the initial penalty coefficient $\gamma$ may be determined by a user. For example, it is possible to get a rough approximation from a past solving result. Note that a degree of continuity and discretization may be controlled by using a penalty term R(p) in the following formula (13). For example, it is preferred to search for a continuous solution when the penalty coefficient $\gamma < 0$, and it is preferred to search for a discrete solution when the penalty coefficient $\gamma > 0$. As an example, as the machine learning progresses, the penalty coefficient $\gamma$ is gradually changed from a negative value to a positive value. As a result, as the machine learning progresses, the penalty term in the following formula (13) changes from a state in which the loss decreases as the discrete vector p becomes continuous to a state in which the loss increases as the discrete vector p becomes continuous. An additional computational cost is only that the number of parameters increases by O (S) from one preceding layer of the final layer to the final layer in FIG. 1.

[Math. 13]

$$R(P) = \gamma \sum_{i=1}^{N} \sum_{j=1}^{M} \left(\left(2P_{ij} - 1\right)^2 - 1\right) \quad (13)$$

Next, the above solution principle will be verified. A maximal independent set problem on the graph $G = (V, \varepsilon)$ is solved simultaneously with a plurality of penalty coefficients. The function to be optimized is set as the following formula (14).

[Math. 14]

$$min - \sum_{i=1}^{N} x_i + \gamma \sum_{ij \in \varepsilon} x_i x_j \quad (14)$$

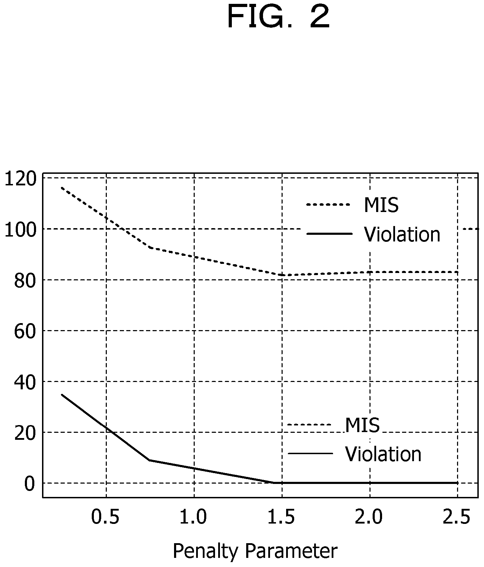

The solving of the present embodiment is applied to a maximal independent set (MIS). The MIS is a problem for finding the largest independent set on a certain graph. The independent set is a set of nodes in which both sides of a side are included in the set when any other vertex is added. FIG. 2 illustrates a result. The horizontal axis represents a value of the penalty coefficient $\gamma$, and the vertical axis represents a size of the independent set. It is indicated that a better approximate solution is obtained as a value on the vertical axis increases. Since the MIS is high, favorable approximate solutions are obtained in the present embodiment. On the other hand, violation is low. Furthermore, the MIS and the violation are simultaneously obtained in parallel. Note that the violation represents the number of variables that violate the constraint condition.

Note that various solutions may be obtained by the following formula (15) optimized for the same problem C and the same penalty coefficient $\gamma$ as in the formula (9) described above.
[Math. 15]

$$\min_{P} \left( \sum_{s} E(P_{:,s}; C, \gamma) + \gamma R(P) \right) \quad (15)$$

Here, the following formula (16) is a penalty term for setting each column not to have the same value. In this case, for example, R (P) may be expressed as the following formula (17). First, a plurality of solutions may be simultaneously obtained in parallel by matrix relaxation. Moreover, the penalty term makes it possible to obtain various solutions.
[Math. 16]

$$R: [0,1]^{N \times M} \to \mathbb{R} \quad (16)$$

[Math. 17]

$$R(P) = SSTD\left( \{P_{:,s}\}_{s=1}^{S} \right) = S \sqrt{\sum_{s=1}^{S} \left( P_{:,s} - \sum_{s} P_{:,s}/S \right)^2} \quad (17)$$

For example, it is sufficient if parameterization is carried out as in the following formula (18) in a similar manner to the case of simultaneous solving of a plurality of penalty coefficients.
[Math. 18]

$$\min_{\theta,\phi} \left( \sum_{S} E\left(P_{:,S}(h_{C,\phi}; C, \theta); C, \gamma\right) + \gamma R(P(h_{C,\phi}; C, \theta)) \right) \quad (18)$$

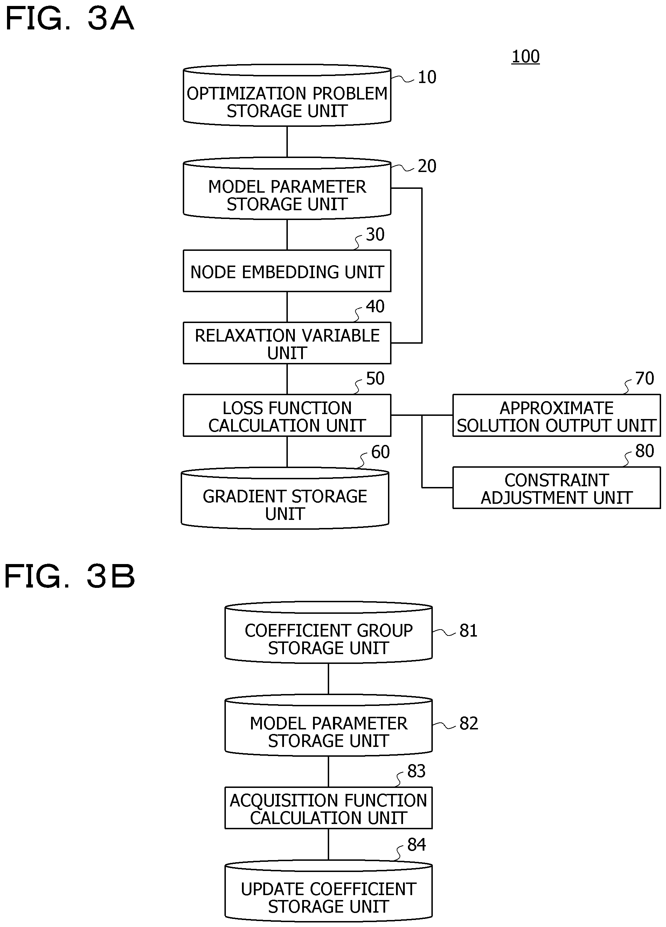

Next, a device configuration for achieving the above solving principle will be described. FIG. 3A is a functional block diagram illustrating an overall configuration of an information processing device 100 according to the first embodiment. The information processing device 100 is a server for optimization processing, or the like. As exemplified in FIG. 3A, the information processing device 100 functions as an optimization problem storage unit 10, a model parameter storage unit 20, a node embedding unit 30, a relaxation variable unit 40, a loss function calculation unit 50, a gradient storage unit 60, an approximate solution output unit 70, a constraint adjustment unit 80, and the like. The information processing device 100 functions as a machine learning device at a time of machine learning, and functions as a determination device at a time of determination. FIG. 3B is a block diagram illustrating details of the constraint adjustment unit 80. As exemplified in FIG. 3B, the constraint adjustment unit 80 functions as a coefficient group storage unit 81, a model parameter storage unit 82, an acquisition function calculation unit 83, an update coefficient storage unit 84, and the like.

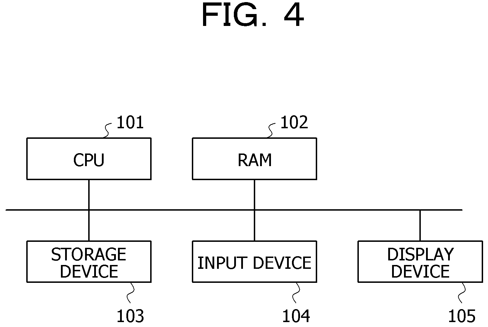

FIG. 4 is a hardware configuration diagram of the information processing device 100. As exemplified in FIG. 4, the information processing device 100 includes a central processing unit (CPU) 101, a random access memory (RAM) 102, a storage device 103, an input device 104, a display device 105, and the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. As the storage device 103, for example, a read only memory (ROM), a solid state drive (SSD) such as a flash memory, a hard disk to be driven by a hard disk drive, or the like may be used. The storage device 103 stores a machine learning program and a determination program. The input device 104 is a device for the user to input needed information, and is a keyboard, a mouse, or the like. The display device 105 is a display device that displays, on a screen, an approximate solution output from the approximate solution output unit 70. Each unit of the information processing device 100 is implemented by the CPU 101 executing an operation program or the machine learning program. Note that hardware such as a dedicated circuit may be used as each unit of the information processing device 100.

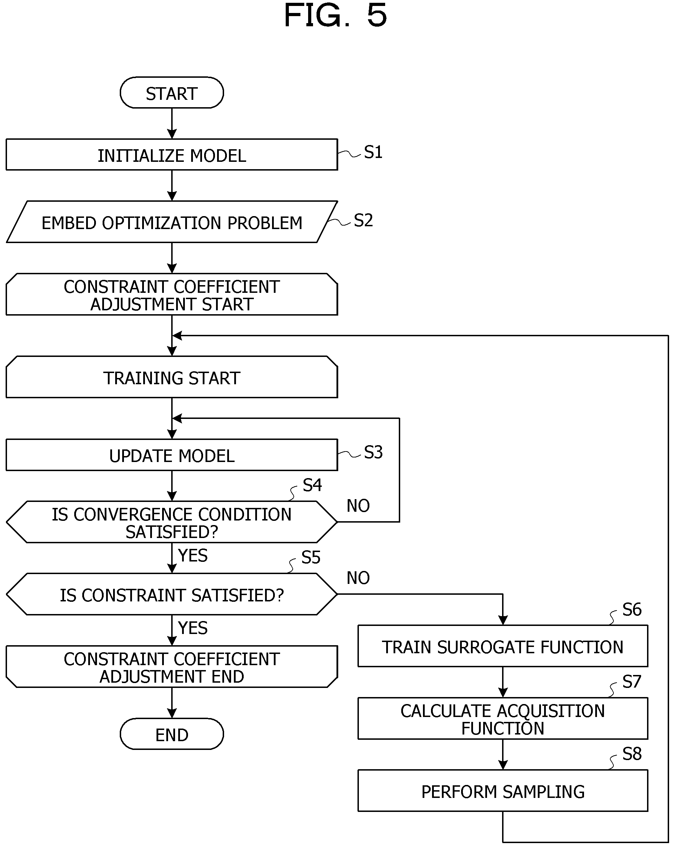

FIG. 5 is a flowchart illustrating exemplary operation of the information processing device 100 at the time of machine learning (training of a model by machine learning). As exemplified in FIG. 5, the loss function calculation unit 50 initializes a model and a constraint coefficient (step S1). Specifically, the loss function calculation unit 50 sets model parameters stored in the model parameter storage unit 20 to predetermined initial values, and sets penalty coefficients $\gamma_S$ stored in the coefficient group storage unit 81 to predetermined initial values.

Next, the node embedding unit 30 performs embedding of an optimization problem (step S2). For example, in a case of a problem using a graph, the node embedding unit 30 converts a graph feature vector of the given optimization problem into an embedded vector $h_{\varphi,G}$. Furthermore, the relaxation variable unit 40 sets a dynamic variable to be relaxed and parameterized by a neural network. Furthermore, the node embedding unit 30 uses the penalty coefficient stored in the coefficient group storage unit 81. As a result, the loss function expressed by the formula (9) described above is obtained.

Next, the loss function calculation unit 50 updates the model parameters by a gradient method (step S3). The loss function calculation unit 50 updates the model parameters using the gradient stored in the gradient storage unit 60. The model parameters are not updated when step S3 is performed for the first time.

Next, the loss function calculation unit 50 determines whether or not a convergence condition is satisfied (step S4). For example, it is determined whether or not the loss function of the formula (9) described above is no longer smaller than a specified value even if step S3 is repeatedly performed. If it is determined as "No" in step S4, step S3 and subsequent steps are performed again.

If it is determined as "Yes" in step S4, the loss function calculation unit 50 determines whether or not the constraint is satisfied (step S5). For example, the loss function calculation unit 50 checks whether the constraint condition of the constrained optimization problem is satisfied. For example, when a solver performs solving by the penalty method, a constraint violation may occur depending on adjustment of the penalty coefficient, and thus the constraint condition of the constrained optimization problem is determined not to be satisfied if the constraint is violated.

If it is determined as "No" in step S5 (in other words, if it is determined that there is a constraint violation), the acquisition function calculation unit 83 trains a surrogate function using the formula (12) described above (step S6). In this case, the acquisition function calculation unit 83 uses surrogate function model parameters stored in the model parameter storage unit 82. Furthermore, the acquisition function calculation unit 83 uses the loss function and the penalty coefficient $\gamma$ obtained by step S3 most recently performed. Note that the loss function and the penalty coefficient $\gamma$ obtained by step S3 most recently performed is stored in the coefficient group storage unit 81.

Next, the acquisition function calculation unit 83 calculates an acquisition function using the surrogate function trained in step S6 (step S7).

Next, the acquisition function calculation unit 83 proposes the next search range $[\gamma_{min}, \gamma_{max}]$, and samples the penalty coefficient $\gamma_{new}$ of S points by making a division into grids. Then, a solving result of $\gamma_{new}$ is added to $\gamma_S$ (step S8). The penalty coefficient obtained in step S8 is stored in the update coefficient storage unit 84. Thereafter, step S3 and subsequent steps are performed again. Note that the penalty coefficient $\gamma_{new}$ stored in the update coefficient storage unit 84 is used at the time of the second or subsequent execution of step S3.

If it is determined as "Yes" in step S5, the execution of the flowchart is terminated. In this case, the model parameter storage unit 20 stores the model parameters in the case where the loss function is minimized.

According to the machine learning of FIG. 5, a machine learning model that minimizes the loss function of the formula (9) described above may be obtained. The machine learning model (model parameter) is stored in the model parameter storage unit 20.

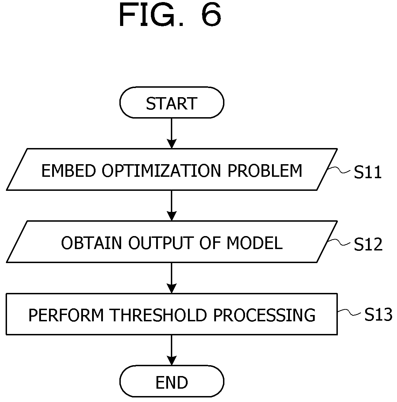

FIG. 6 is a flowchart illustrating exemplary operation of the information processing device 100 when an approximate solution of the optimization problem is output using the result of the machine learning model obtained by the machine learning of FIG. 5. As exemplified in FIG. 6, the node embedding unit 30 performs embedding of the optimization problem (step S11).

Next, the approximate solution output unit 70 obtains an output of the machine learning model (step S12).

Next, the approximate solution output unit 70 performs threshold processing on the optimum solution output from the machine learning model (step S13). For example, a threshold is provided to binarize each value output from the machine learning model. For example, in a case of converting each value into a binary of 0 and 1, the threshold is set to 0.5 or the like, and a value larger than 0.5 is set to 1, and a value smaller than 0.5 is set to 0.

Note that, in the embodiment described above, the optimization problem using a graph as an optimization target has been described. The optimization problem using a graph is not particularly limited, and an energy transport problem or the like is exemplified as an example. The embodiment described above is applicable to an optimization problem not using a graph as an optimization target. The optimization problem not using a graph is also not particularly limited, and a company scheduling problem or the like is exemplified as an example.

In the embodiment described above, the loss function calculation unit 50 is an exemplary execution unit that performs a process of machine learning of a model using a cost function in which each element of a matrix obtained by relaxing a discrete variable to be optimized to a continuous matrix becomes a discrete optimization problem as a cost function in a search process of performing a search by adopting continuous relaxation into the discrete optimization problem. The approximate solution output unit 70 is an exemplary output unit that outputs a solution by embedding an optimization problem in the model obtained by executing the machine learning program obtained by the machine learning.

While the embodiment has been described above in detail, the embodiment is not limited to such a particular embodiment, and various modifications and alterations may be made within the scope of the gist of the embodiment described in the claims.

**Claims**

1. A machine learning program for causing a computer to execute a process comprising:
   training a machine learning model by machine learning that uses a cost function in which each element of a matrix obtained by relaxing a discrete variable to be optimized to a continuous matrix becomes a discrete optimization problem as a cost function in a search process that performs a search by adopting continuous relaxation into the discrete optimization problem.

2. The machine learning program according to claim 1, wherein

   the cost function includes a penalty term that represents a constraint in the search process, and
   a penalty coefficient of the penalty term is trained in the training of the machine learning model.

3. The machine learning program according to claim 1, wherein the discrete optimization problem is expressed in a quadratic unconstrained binary optimization (QUBO) format.

4. The machine learning program according to claim 1, wherein in the training of the machine learning model, a loss term according to a degree of continuity and discretization of a variable to be optimized is used, and the loss term is changed according to progress of the search process.

5. The machine learning program according to claim 4, storing the machine learning program for causing the computer to execute the process further comprising:
   changing, as the search process progresses, the loss term from a state in which a loss decreases as the variable becomes continuous to a state in which the loss increases as the variable becomes continuous.

6. A determination program for causing a computer to execute a process comprising:
   outputting a solution by embedding an optimization problem in a machine learning model trained by execution of the machine learning program for causing the computer to execute a process including training a machine learning model by machine learning that uses a cost function in which each element of a matrix obtained by relaxing a discrete variable to be optimized to a continuous matrix becomes a discrete optimization problem as a cost function in a search process that performs a search by adopting continuous relaxation into the discrete optimization problem.

7. A machine learning method implemented by a computer, the machine learning method comprising:

training a machine learning model by machine learning that uses a cost function in which each element of a matrix obtained by relaxing a discrete variable to be optimized to a continuous matrix becomes a discrete optimization problem as a cost function in a search process that performs a search by adopting continuous relaxation into the discrete optimization problem.

8. A determination method implemented by a computer, the determination method comprising:
outputting a solution by embedding an optimization problem in a machine learning model trained by execution of the machine learning program for causing the computer to execute a process including training a machine learning model by machine learning that uses a cost function in which each element of a matrix obtained by relaxing a discrete variable to be optimized to a continuous matrix becomes a discrete optimization problem as a cost function in a search process that performs a search by adopting continuous relaxation into the discrete optimization problem.

9. A machine learning device comprising:

a processor configured to
train a machine learning model by machine learning that uses a cost function in which each element of a matrix obtained by relaxing a discrete variable to be optimized to a continuous matrix becomes a discrete optimization problem as a cost function in a search process that performs a search by adopting continuous relaxation into the discrete optimization problem.

10. A determination device comprising:

a processor configured to
output a solution by embedding an optimization problem in a machine learning model trained by execution of the machine learning program for causing the computer to execute a process including training a machine learning model by machine learning that uses a cost function in which each element of a matrix obtained by relaxing a discrete variable to be optimized to a continuous matrix becomes a discrete optimization problem as a cost function in a search process that performs a search by adopting continuous relaxation into the discrete optimization problem..

# FIG. 1

# FIG. 2

## FIG. 3A

100

OPTIMIZATION PROBLEM STORAGE UNIT — 10

MODEL PARAMETER STORAGE UNIT — 20

NODE EMBEDDING UNIT — 30

RELAXATION VARIABLE UNIT — 40

LOSS FUNCTION CALCULATION UNIT — 50

APPROXIMATE SOLUTION OUTPUT UNIT — 70

GRADIENT STORAGE UNIT — 60

CONSTRAINT ADJUSTMENT UNIT — 80

## FIG. 3B

COEFFICIENT GROUP STORAGE UNIT — 81

MODEL PARAMETER STORAGE UNIT — 82

ACQUISITION FUNCTION CALCULATION UNIT — 83

UPDATE COEFFICIENT STORAGE UNIT — 84

FIG. 4

101

CPU

102

RAM

STORAGE
DEVICE

INPUT DEVICE

DISPLAY
DEVICE

103

104

105

# FIG. 5

START

INITIALIZE MODEL — S1

EMBED OPTIMIZATION PROBLEM — S2

CONSTRAINT COEFFICIENT
ADJUSTMENT START

TRAINING START

UPDATE MODEL — S3

IS CONVERGENCE CONDITION
SATISFIED? — S4    NO

YES — S5

IS CONSTRAINT SATISFIED?    NO

YES

CONSTRAINT COEFFICIENT
ADJUSTMENT END

END

TRAIN SURROGATE FUNCTION — S6

CALCULATE ACQUISITION
FUNCTION — S7

PERFORM SAMPLING — S8

# FIG. 6

```
          ┌─────────────┐
          │    START    │
          └─────────────┘
                 │
                 ▼
    ╱────────────────────────────╱
   ╱ EMBED OPTIMIZATION PROBLEM  ╱∿ S11
  ╱────────────────────────────╱
                 │
                 ▼
    ╱────────────────────────────╱
   ╱   OBTAIN OUTPUT OF MODEL    ╱∿ S12
  ╱────────────────────────────╱
                 │
                 ▼
    ┌────────────────────────────┐
    │ PERFORM THRESHOLD PROCESSING│∿ S13
    └────────────────────────────┘
                 │
                 ▼
          ┌─────────────┐
          │     END     │
          └─────────────┘
```

Europäisches
Patentamt

European
Patent Office

Office européen
des brevets

# EUROPEAN SEARCH REPORT

**Application Number**

EP 24 22 0487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 742 345 A1 (BOSCH GMBH ROBERT [DE]; UNIV CARNEGIE MELLON [US]) 25 November 2020 (2020-11-25) * paragraphs [0008], [0013], [0028], [0072] * | 1-10 | INV. G06N5/01 G06F17/11 G06N20/00 |

----- 

|  |  |  | TECHNICAL FIELDS SEARCHED (IPC) |
|---|---|---|---|
|  |  |  | G06N G06F |

The present search report has been drawn up for all claims

| Place of search | Date of completion of the search | Examiner |
|---|---|---|
| The Hague | 24 April 2025 | Falco, Gabriele |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 0487

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2025

| Patent document cited in search report | | Publication date | Patent family member(s) | | Publication date |
|---|---|---|---|---|---|
| EP 3742345 | A1 | 25-11-2020 | CN | 111967567 A | 20-11-2020 |
| | | | EP | 3742345 A1 | 25-11-2020 |
| | | | JP | 7540632 B2 | 27-08-2024 |
| | | | JP | 2020191088 A | 26-11-2020 |
| | | | US | 2020372364 A1 | 26-11-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHUETZ, M. J.** ; **BRUBAKER, J. K.** ; **KATZGRA-BER, H. G.** Combinatorial optimization with physics-inspired graph neural networks. *Nature Machine Intelligence*, 2022, vol. 4 (4), 367-377

- **SCHUETZ, M. J.** ; **BRUBAKER, J. K.** ; **ZHU, Z.** ; **KATZGRABER, H. G.** Graph coloring with physics-inspired graph neural networks. *Physical Review Research*, 2022, vol. 4 (4), 043131